(19) Europäisches Patentamt
European Patent Office
Office européen des brevets

(11) **EP 2 502 088 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(51) Int Cl.:
***G01S 3/783*** *(2006.01)*  ***G01S 3/784*** *(2006.01)*
***G01S 7/48*** *(2006.01)*

(21) Anmeldenummer: **10784740.2**

(22) Anmeldetag: **16.11.2010**

(86) Internationale Anmeldenummer:
**PCT/EP2010/067576**

(87) Internationale Veröffentlichungsnummer:
**WO 2011/058191 (19.05.2011 Gazette 2011/20)**

(54) **VORRICHTUNG UND VERFAHREN ZUM LOKALISIEREN VON MODULIERTEN STRAHLUNGSQUELLEN**

DEVICE AND METHOD FOR LOCALIZING MODULATED RADIATION SOURCES

DISPOSITIF ET PROCÉDÉ DE LOCALISATION DE SOURCES DE RAYONNEMENT MODULÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2009 DE 102009046742**

(43) Veröffentlichungstag der Anmeldung:
**26.09.2012 Patentblatt 2012/39**

(73) Patentinhaber: **Opto-MST Sensoren Und Systeme GmbH**
**99099 Erfurt (DE)**

(72) Erfinder:
• **FREITAG, Hans-Joachim**
**99084 Erfurt (DE)**

• **ORTLEPP, Hans-Georg**
**99192 Apfelstädt (DE)**
• **SCHMIDT, Andreas**
**99094 Erfurt (DE)**
• **BUSCHMANN, Uwe**
**99310 Arnstadt (DE)**

(74) Vertreter: **Patentanwälte Geyer, Fehners & Partner mbB**
**Perhamerstrasse 31**
**80687 München (DE)**

(56) Entgegenhaltungen:
**EP-A1- 0 293 049     EP-A1- 0 747 719**
**EP-A1- 1 357 393     WO-A1-2006/061819**

**Beschreibung**

Die Erfindung bezieht sich auf eine Vorrichtung zum Lokalisieren von modulierten, optischen Strahlungsquellen, die aufweist: mehrere Strahlungsdetektoren, die für optische Strahlung eines vorbestimmten Strahlungsbereiches empfindlich sind und Detektorelemente aufweisen, welche jeweils Einzelsektorsignale abgeben, die einem Raumsektor zugeordnet sind, aus dem die Strahlung auf den Strahlungsdetektor einfällt, und eine Auswerteeinrichtung, der die Einzelsektorsignale der Strahlungsdetektoren zugeführt sind und die daraus Angaben über die Einfallsrichtung, aus der die optische Strahlung auf die Vorrichtung einfällt, erzeugt, wobei für die optische Strahlung eine charakteristische Länge gegeben ist, innerhalb der im Strahlungsquerschnitt auftretende Strahlungsintensitätsschwankungen nicht statistisch unabhängig sind.

Die Erfindung bezieht sich weiter auf ein Verfahren zum Lokalisieren von modulierten, optischen Strahlungsquellen, wobei mehrere Strahlungsdetektoren, die für optische Strahlung eines vorbestimmten Strahlungsbereiches empfindlich sind und Detektorelemente aufweisen, die Einzelsektorsignale abgeben, die jeweils einem Raumsektor zugeordnet sind, aus dem die Strahlung auf den Strahlungsdetektor einfällt, und aus den Einzelsektorsignalen der Strahlungsdetektoren Angaben über die Einfallsrichtung, aus der die Strahlung auf die Vorrichtung einfällt, erzeugt werden, wobei für die optische Strahlung eine charakteristische Länge gegeben ist, innerhalb der im Strahlungsquerschnitt auftretende Strahlungsintensitätsschwankungen nicht statistisch unabhängig sind.

Eine solche Vorrichtung und ein solches Verfahren sind aus der EP 1357393 A1 und der EP 0747719 A1 bekannt.

Sowohl im militärischen als auch im zivilen Bereich werden verstärkt Warnsysteme bzw. Erkennungssysteme zur Detektion von modulierter, optischer Strahlung, insbesondere Laserstrahlung, und zur Lokalisierung der Strahlungsquellen eingesetzt. Pulslaserstrahlungsquellen dienen bevorzugt für Zielbeleuchter, Blendlaser oder für die Entfernungsmessung. Die Wellenlänge dieser Strahlung sowohl im zivilen als auch im militärischen Bereich liegt in der Regel im nahen Infrarotbereich, der für das menschliche Auge nicht direkt sichtbar ist.

Aus den Patentschriften DE 3323828 C2 und DE 3525518 C2 sind Vorrichtungen und Verfahren zur Detektion und Lokalisierung von Pulslaserstrahlungsquellen bekannt.

Außer der Identifizierung von Laserstrahlungspulsen ist vor allem die Richtungserkennung einfallender, modulierter Laserstrahlung von Bedeutung. Lösungen hierzu sind in der Patentliteratur beschrieben, z. B. in der DE 3525518 C2. Dort werden Glasfasern unterschiedlicher Länge mit sehr schnellen Photoempfängern in sehr aufwendigen Sensoranordnungen eingesetzt. Die damit erreichbare Winkelauflösung im Gradbereich ist für viele Anforderungen aber dennoch nicht ausreichend.

In der US-Patentschrift 5428215 ist ein sogenannter Digital High Angular Resolution Laser Irradiation Detector (HARLID) beschrieben, bei dem zur Richtungserkennung ein mit vielen Einzeldioden versehenes lineares Diodenarray hinter einer Lochmaskenzeile vorgesehen ist. Dieses Prinzip erlaubt nur eine begrenzte Auflösung (Graycode mit 2 hoch 6 Werten) und keine Aussage über die Wellenlänge. Aufgrund der sehr geringen Fläche der Einzeldioden ist die Empfindlichkeit zudem sehr gering. Daneben kann ein HARLID-Sensor die Strahlung nur bezüglich einer Richtungsebene detektieren.

Die Offenlegungsschrift DE 102007024051 A1 beschreibt eine Vorrichtung und ein Verfahren zur Detektion und Lokalisierung von Laserstrahlungsquellen unter Verwendung einer Beugungsoptik vor einer CCD- oder CMOS-Kamera. Dabei werden sehr hohe Anforderungen an den Dynamikbereich der Kameras gestellt und, um eine hohe Winkelauflösung zu erreichen, sind auch hoch auflösende Spezialkameras mit speziellen Kennlinien erforderlich.

Ein großer spektraler Empfindlichkeitsbereich kann beim Ansatz der DE 102007024051 A1 nur mit unterschiedlichen Kamerasystemen abgedeckt werden, die parallel zu betreiben sind. So werden für den Bereich 800 nm bis 1100 nm CMOS Kameras, für den Wellenlängenbereich 1100 nm bis 1700 nm InGaAs-Kameras und für den Wellenlängenbereich 3-5 $\mu$m Infrarotkameras mit Platin-Silizid-Detektoren vorgeschlagen. Um größere Spektralbereiche abzudecken, sind diese unterschiedlichen Kamerasysteme jeweils mit gesonderten Optiken zu verwenden. Das treibt nicht nur die Kosten in die Höhe, sondern auch das Gewicht und benötigt einen nicht unerheblichen Bauraum. Außerdem sind CCD- und CMOS-Kameras prinzipiell nicht für die zeitaufgelöste Messung kurzer Laserimpulse geeignet.

Weiter hat es sich bei der Detektion von Laserstrahlung, die über eine große Entfernung einfällt, als problematisch erwiesen, daß deren Strahlen ein gewisses Flimmern (auch als Szintillation bezeichnet) zeigen. Dieses Flimmern hat bei der Ferndetektion einen wesentlichen Einfluß auf die Winkelauflösung und die Detektionswahrscheinlichkeit. Die Publikation Quellmalz, W., "Steigerung der Genauigkeit von Laser Trackern", DE ISBN-10: 3867273340, zeigt, daß ein Laserstrahl zwischen Luftschichten unterschiedlicher Dichte gebrochen wird, was sowohl zu systematischen als auch zu stochastischen Fehlern bei der Detektion führt. Diese sind ab gewissen Entfernungen als dominante Fehlerquellen einzuschätzen. Aus der Veröffentlichung Mitani Y., et al., Proceedings of the 41st SICE Annual Conference, SICE 2002, Vol. 3, Issue 5-7, p. 1881-1884, ist es bekannt, daß für das Flimmern eines Laserstrahls zeitliche und räumliche Veränderung atmosphärischer Turbulenzen und/oder des Luftdrucks verantwortlich sein kann. Diese Veröffentlichung befaßt sich mit einer Korrelation zwischen dem Flimmern des Laserstrahls und Windgeräuschen eines Fahrzeuges.

Der Erfindung liegt die Aufgabe zu Grunde, eine Vorrichtung bzw. ein Verfahren der eingangs genannten Art so weiterzubilden, daß auch bei der Ferndetektion das Flimmern des modulierten, optischen Strahls keine unzulässigen Fehler verursacht.

Diese Aufgabe wird gelöst mit einer Vorrichtung zum Lokalisieren von modulierten, optischen Strahlungsquellen, die aufweist: mehrere Strahlungsdetektoren, die für optische Strahlung eines vorbestimmten Strahlungsbereiches empfindlich sind und Detektorelemente aufweisen, welche jeweils Einzelsektorsignale abgeben, die einem Raumsektor zugeordnet sind, aus dem die Strahlung auf den Strahlungsdetektor einfällt, und eine Auswerteeinrichtung, der die Einzelsektorsignale der Strahlungsdetektoren zugeführt sind und die daraus Angaben über die Einfallsrichtung, aus der die optische Strahlung auf die Vorrichtung einfällt, erzeugt, wobei für die optische Strahlung eine charakteristische Länge zwischen 3 und 6 cm gegeben ist, innerhalb der im Strahlungs-querschnitt auftretende Strahlungsintensitätsschwan-kungen nicht statistisch unabhängig sind, wobei zwischen horizontal und/oder vertikal benachbarten Strahlungsdetektoren jeweils ein Abstand vorgesehen ist, der größer ist als ein Abstand zwischen den Einzeldetektorelementen und mindestens 15% der charakteristische Länge und höchstens 60 % der charakteristischen Länge beträgt, und die Auswerteeinrichtung alle dem gleichen Sektor zugeordneten Einzelsektorsignale der Strah-lungsdetektoren zu einem Gesamtsektorsignal zusam-menfaßt und aus einer Auswertung der Gesamtsektorsignale die Angaben über die Einfallsrichtung erzeugt. Die Aufgabe wird weiter gelöst mit einem Verfahren zum Lokalisieren von modulierten, optischen Strahlungsquellen, wobei mehrere Strahlungsdetektoren, die für opti-sche Strahlung eines vorbestimmten Strahlungsberei-ches empfindlich sind und Detektorelemente aufweisen, die Einzelsektorsignale abgeben, die jeweils einem Raumsektor zugeordnet sind, aus dem die Strahlung auf den Strahlungsdetektor einfällt, und aus den Einzelsektorsignalen der Strahlungsdetektoren Angaben über die Einfallsrichtung, aus der die Strahlung auf die Vorrichtung einfällt, erzeugt werden, wobei für die optische Strahlung eine charakteristische Länge zwischen 3 und 6 cm gegeben ist, innerhalb der im Strahlungsquerschnitt auftretende Strahlungsintensitätsschwankungen nicht statistisch unabhängig sind, wobei zwischen horizontal und/oder vertikal benachbarten Strahlungsdetektoren jeweils ein Abstand vorgesehen wird, der größer ist als ein Abstand zwischen den Einzeldetektorelementen und mindestens 15% der charakteristischen Länge und höchstens 60 % der charakteristischen Länge beträgt, dem gleichen Sektor zugeordnete Einzelsektorsignale der Strahlungsdetektoren zu einem Gesamtsektorsignal zusammenfaßt und aus einer Auswertung der Gesamtsektorsignale die Angaben über die Einfallsrichtung erzeugt werden.

Erfindungsgemäß werden also mehrere Strahlungsdetektoren parallel eingesetzt, und zur Signalverbesserung wird nicht, was naheliegend wäre, eine Mittelung über die Richtungsangaben der einzelnen Strah-lungsdetektoren ausgeführt, sondern die korrespondie-renden Kanäle der Strahlungsdetektoren werden zusammengefaßt. Dies wird hier unabhängig von der Detektor-bauweise auch als quadrantenrichtige Zusammenfas-sung bezeichnet. Aus den derart zusammengefaßten Einzelsektorsignalen wird dann die Richtungsangabe abgeleitet. Es zeigt sich, daß durch diesen Ansatz dem Flimmern im modulierten, optischen Strahl wirkungsvoll begegnet werden kann. Experimentelle Untersuchungen ergaben eine Verbesserung etwa um das fünffache. Diese Verbesserung rührt daher, daß es beispielsweise bei einem Strahlungsdetektor, der aus einer quadratischen Anordnung von Detektorelementen besteht, statistisch nicht unwahrscheinlich ist, daß in der quadratischen Anordnung zwei nebeneinanderliegende Detektorelemente in einer Zone fast kompletter Auslöschung der Strahlung liegen, die anderen beiden Detektorelemente aber relativ viel Strahlung erhalten. Eine solche Situation führt zu einem großen Winkelfehler. Es ist aber bei nebeneinan-derliegenden Strahlungsdetektoren extrem unwahr-scheinlich, daß die gleiche Situation beispielsweise in einem Feld mit vier Laserstrahlungsdetektoren (die jeweils vier Detektorelemente aufweisen) auftritt, wenn die vorgeschriebene Beabstandung eingehalten wird. Das erfindungsgemäße Konzept, die Einzelsektorsignale der Strahlungsdetektoren zusammenzufassen, erzielt somit einen signifikanten Vorteil hinsichtlich der Genauigkeit, mit der die Richtung einfallender Strahlung erfaßt werden kann.

Um eine statistische Unabhängigkeit von Intensitätsschwankungen über den Strahlquerschnitt der zu detektierenden Laserstrahlung zu erreichen, würde man zuerst daran denken, die Zentren der Strahlungsdetektoren möglichst weit auseinander zu legen. Damit ergibt sich tatsächlich eine Verbesserung des Winkelfehlers um den Faktor $\sqrt{n}/n$ bei einer Strahlungsdetektoranzahl von n. Die Erfinder erkannten jedoch, daß überraschenderweise ein Zentrumsabstand, der geringer ist, als er für eine statistische Unabhängigkeit der Intensitätsschwankungen erforderlich wäre, zu einem nochmals verbesserten Ergebnis führt. Es ist deshalb vorgesehen, die Strahlungsdetektoren bezüglich ihrer Zentren in einem Abstand zueinander zu legen, der geringer als die charakteristische Länge ist, welche die statistische Unabhängigkeit von Intensitätsschwankungen im Strahlungsquerschnitt kennzeichnet. Durch eine derart ungewöhnliche Wahl des Abstandes der Strahlungsdetektoren erreicht man bereits bei zwei Detektoren eine nochmalige Verbesserung des Winkelfehlers um den Faktor 2 und besser. Die Grenze für die Verringerung ist jedoch dadurch gegeben, daß die Strahlungsdetektoren nicht zu nahe beabstandet sein dürfen. Sie sollten auf jeden Fall weiter beabstandet sein, als die Detektorelemente der Strahlungsdetektoren. Bei einem Abstand von 15 % der charakteristischen Länge sind die Winkelfehler besonders gering.

Die charakteristische Länge liegt je nach Anwendung zwischen 3 und 6 cm, in den meisten Fällen (Luft als Medium) zwischen 3,5 und 4,5 cm. Für die Detektion von militärischen Ziellasern hat sich ein Abstand zwischen 6 und 25 mm als optimal erwiesen, da sich dann die Winkelfehler benachbarter Strahlungsdetektoren in der quadrantenrichtigen Zusammenfassung gegenseitig zumindest teilweise kompensieren.

Der erfindungsgemäße Abstand zwischen den Strahlungsdetektoren erlaubt es weiter, die Detektorfläche der Einzeldetektoren in jedem Strahlungsdetektor größer zu wählen, was sich auf die Signalintensität und damit im Ergebnis auf die Nachweisgrenze auswirkt.

Die mehreren Detektoren können auch als flächenhaftes Musterraster angeordnet werden. Die Abstandsangabe gilt dann für den geringeren Abstand im Raster.

Für das Konzept können verschiedenste Strahlungsdetektoren eingesetzt werden, soweit diese Detektorelemente aufweisen, die ein entsprechendes Signal bereitstellen, das jeweils einem Raumsektor zugeordnet ist. Insbesondere können die Strahlungsdetektoren der deutschen Anmeldung Nr. 102009046740.8 verwendet werden, deren Offenbarungsgehalt diesbezüglich voll eingebunden sei. Ein solches Signal ist im Sinne der Erfindung dann gegeben, wenn der Wert dieses Signals, vorzugsweise seine Amplitude, mit der Richtung der einfallenden Strahlung derart verknüpft ist, daß das Signal anwächst oder abfällt, je näher die Einfallsrichtung dem entsprechenden Raumsektor ist. Dies kann dadurch ausgedrückt werden, daß der Abstand zwischen dem tatsächlichen Stereowinkel der einfallenden Strahlung und dem maximalen Einfallswinkel im betreffenden Raumsektor abnimmt. Das Einzelsektorsignal nimmt also zu (oder fällt), wenn der Einfallswinkel der Strahlung sich auf einen maximalen Schrägeinfall aus dem betreffenden Raumsektor hin verändert.

Die Raumsektoren teilen den Halbraum auf. Eine Mindestaufteilung sieht dabei zwei Raumsektoren vor, die den abgedeckten Winkelbereich aufteilen, also beispielsweise halbieren. Da der Winkelbereich, in dem ein Strahlungsdetektor einfallende Strahlung nachweisen kann, regelmäßig kleiner als der Halbraum 2 π ist, ist ein Raumsektor üblicherweise kleiner als ein Viertelraum π. Für eine Detektion der Einfallsrichtung durch zwei Winkelangaben, einen Elevationswinkel und einen Azimutwinkel sind Strahlungsdetektoren erforderlich, die mindestens drei Raumsektoren getrennt zugeordnete Einzelsektorsignale bereitstellen. Mit der Zahl der Sektoren steigt die Winkelauflösung zwangsläufig. Allerdings nimmt bei bestimmten Strahlungsdetektorkonzepten dann die Strahlungsempfindlichkeit ab, da in der Regel die Fläche von Detektorelementen sinkt. Ein guter Ausgleich zwischen diesen gegenläufigen Effekten ist ein Strahlungsdetektor, der vier Raumsektoren zugeordnete Sektoreinzelsignale erzeugt. Die vier Raumsektoren entsprechen dann Quadranten und sind kleiner π/2.

Ein solcher Strahlungsdetektor umfaßt gemäß DE 102009046740.8 beispielsweise eine Blendeneinrichtung und eine Detektoreinrichtung, die bezogen auf längs einer Haupteinfallsachse einfallender Laserstrahlung hinter der Blendenöffnung liegt, wobei die Detektoreinrichtung mindestens drei Detektorelemente aufweist, die um ein Zentrum herum angeordnet sind, und die Blendeneinrichtung eine Blendenöffnung aufweist, die mittig über dem Zentrum und längst der Haupteinfallsachse vom Zentrum beabstandet angeordnet ist und alle Detektorelemente in Sicht längs der Haupteinfallsachse nur teilweise überdeckt.

Dann werden also mindestens drei Detektorelemente verwendet, die um ein Zentrum herum angeordnet sind. Über dem Zentrum liegt die Blendenöffnung der Blendeneinrichtung, wobei die Blendenöffnung längs der Haupteinfallsachse die Detektorelemente nur teilweise überdeckt. Da zugleich ein Abstand zwischen der Blendenöffnung und dem Detektorelementen besteht, hängt die Fläche, welche die Blendenöffnung über einem Detektorelement frei läßt, vom Winkel der Projektion und damit von der aktuellen Einfallsrichtung der Strahlung ab. Je schräger die Strahlung einfällt, desto mehr wird ein gegebenes Detektorelement mit Strahlung beaufschlagt und desto weniger Strahlung erhält das bezogen auf das Zentrum gegenüberliegende Detektorelement. Die Detektorelemente haben vorzugsweise keine Ortsauflösung, da diese für das Konzept gar nicht benötigt wird. Ihr strahlungsempfindlicher, nicht ortsauflösender Empfangsbereich wird je nach Richtung eintreffender Strahlung mehr oder weniger von der Blende abgeschattet, wodurch sich ein richtungsabhängiges Signal ergibt.

Sowie diese Beschreibung von Detektorelementen spricht, ist damit die strahlungsempfindliche Fläche eines strahlungsdetektierenden Elementes gemeint. Dies gilt insbesondere für die in dieser Beschreibung zu findenden Lageangaben, die sich jeweils auf die strahlungsempfindliche Fläche bzw. deren Schwerpunkt beziehen.

Die Detektorelemente liegen vorzugsweise im Rahmen der Justiergenauigkeit in einer Ebene. Die Haupteinfallsachse ist dann die Achse, welche auf der Ebene senkrecht steht, und das Zentrum wird definiert durch den Durchstoßpunkt der Haupteinfallsachse durch die Ebene, in welcher die Detektorelemente angeordnet sind.

Es ist aber auch möglich, die Detektorelemente gezielt schräg zu stellen, z. B. in Form eines Tetraedermantels. Die Haupteinfallsachse ist dann diejenige Achse, die mit den Ebenen aller Detektorelemente im Rahmen der Justiergenauigkeit den gleichen Winkel einschließt. Das Zentrum ist dann definiert durch den Durchstoßpunkt der Haupteinfallsachse durch die Ebene, in welche die Zentren aller Detektorelemente aufspannen.

Aus der Vertrimmung, welche die Signale der Detektorelemente gegeneinander zeigen, kann die Richtung der einfallenden Strahlung dann sehr präzise und mit einer sehr hohen Auflösung ermittelt werden.

Bei einem Strahlungsdetektor, der vier Detektorelemente aufweist, können die Gesamtsektorsignale, die durch Detektion der Signalamplituden der Detektorelemente aus einander entsprechenden Raumsektoren, also Quadranten, erhalten wurden, besonders dadurch einfach berechnet werden, daß man die Gesamtsektorsignale nebeneinanderliegender bzw. gegenüberliegender Quadranten addiert und davon die addierten Gesamtsektorsignale der verbleibenden Quadranten abzieht (daher der als pars-pro-toto zu verstehende Begriff "quadrantenrichtig"). Als Normierung wird das Verhältnis zur Summe aller Gesamtsektorsignale herangezogen. Als Signal kann insbesondere die Signalamplitude oder ein daraus abgeleiteter Wert verwendet werden.

Die Anordnung der Detektorelemente um das Zentrum herum ist vorzugsweise auf die Form der Blendenöffnung so abgestimmt, daß für alle Detektorelemente in einer Projektion längs der Haupteinfallsachse die von der Blendenöffnung freigelassenen, also nicht überdeckten Flächenbereiche gleich sind, da dann für Laserstrahlung, welche längs der Haupteinfallsrichtung einfällt, alle Detektorelemente mit der gleichen Strahlungsmenge beaufschlagt werden und somit ein Signal gleicher Amplitude oder gleicher Intensität abgeben.

Die Anordnung der Detektorelemente um das Zentrum herum kann insbesondere kreisförmig sein. Darunter ist zu verstehen, daß die Zentren der einzelnen Detektorelemente auf einer Kreislinie liegen. Es ist damit nicht zwingend verbunden, daß die Randbegrenzungen der Detektorelemente tangential zu einem Kreis angeordnet sind. Eine kreisförmige Anordnung im Sinne dieser Beschreibung ist also insbesondere auch die Anordnung von rechteckigen oder quadratischen Sensorelementen in einem dreieckigen, rechteckigen oder quadratischen Muster (Begrenzungskante der Detektorelemente liegen parallel und Zentren der Detektorelemente liegen auf den Ecken eines Dreieckes, Rechteckes oder Quadrates).

Bei einer kreisförmigen Anordnung ist es besonders vorteilhaft, die Blendenöffnung symmetrisch auszubilden und anzuordnen. Die Form der Blendenöffnung kann durchaus anders sein als die Form der Detektorelemente. Insbesondere kann eine fertigungstechnisch einfach herzustellende, runde Blendenöffnung mit rechteckigen oder quadratischen Detektorelementen kombiniert werden.

Das vorteilhafte Konzept kann bereits bei ausreichend breitbandigen Detektorelementen mit einem Satz von mindestens drei Detektorelementen und einer diesem Satz zugeordneten Blendenöffnung realisiert werden. Die Richtungsauflösung steigt mit der Zahl an Detektorelementen. Bei vier Detektorelementen können fertigungstechnisch günstige, quadratische Detektorelemente verwendet werden.

In bestimmten Applikationen, insbesondere im militärischen Bereich, wird ein sehr breiter Wellenlängenbereich gewünscht, für den die Vorrichtung eine sehr hohe Empfindlichkeit besitzen muß. Der abzudeckende Wellenlängenbereich kann dabei zwischen 500 nm und 1700 nm liegen.

Es ist deshalb zu bevorzugen, mindestens zwei Arten von Strahlungsdetektoren vorzusehen, die unterschiedliche spektrale Empfindlichkeit aufweisen. Die Signale der Laserstrahlungsdetektoren werden dann getrennt nach den Arten verarbeitet, so daß am Ende Gesamtsektorsignale oder sogar Angaben über die Einfallsrichtung getrennt nach den unterschiedlichen spektralen Empfindlichkeiten vorliegen. Durch eine Verhältnisbildung kann daraus eine Angabe über die Wellenlänge der einfallenden Laserstrahlen erzeugt werden.

Insbesondere ist für solche Anwendungen eine Weiterbildung der Erfindung vorgesehen, bei der die Detektoreinrichtung mindestens zwei Sätze von erfindungsgemäß angeordneten Detektorelementen umfaßt, wobei jeder Satz mindestens drei um ein Zentrum angeordnete Detektorelemente aufweist. Die Blendeneinrichtung verfügt pro Satz von Detektorelementen über je eine Blendenöffnung. Diese Sätze an Detektorelementen mit darüberliegenden Blendenöffnungen sind nebeneinander angeordnet, so daß jeder Satz an Detektorelementen mit darüberliegender Blendenöffnung um ein eigenes Zentrum gruppiert ist. Dadurch ergibt sich für jeden Satz eine eigene Haupteinfallsachse. Die Sätze unterscheiden sich hinsichtlich der spektralen Empfindlichkeit ihrer Detektorelemente. Damit wird ein großer Spektralbereich hinreichend gut abgedeckt, ohne das Signal-/Rausch-Verhältnis zu mindern. Natürlich können auch mehr als zwei, sich in ihrer spektralen Empfindlichkeit voneinander unterscheidende Arten von Detektorelementen verwendet werden.

Auch können zur Verbesserung der Richtungsauflösung nebeneinanderliegende Sätze gleicher spektraler Empfindlichkeit gegeneinander verdreht werden, wobei der Drehwinkel vorzugsweise geringer ist, als der Winkelabstand zwischen zwei im Satz benachbarten Detektorelementen. Besonders günstig ist ein Drehwinkel der ein n-tel des Winkelabstands zwischen zwei im Satz benachbarten Detektorelementen beträgt, wobei n die Zahl der in verschiedener Drehlage vorgesehenen Sätze ist.

Zur Auswertung können die Mittelwerte der für jeden Satz getrennt berechneten Winkel E und A ermittelt werden. Alternativ kann der Satz mit dem höchsten Summensignal ausgewählt werden. Es ist auch eine Gewichtung der Winkel E und A mit dem Summensignal des jeweiligen Satzes möglich.

Insbesondere bei der Bauweise mit nebeneinander liegenden Sätzen von spektral unterschiedlich empfindlichen Detektorelementen ist es vorteilhaft, wenn die Haupteinfallsrichtungen der Sätze möglichst parallel liegen, um bei der Richtungsangabe einen möglichst geringen spektralabhängigen Fehler zu erzeugen. Der damit einhergehende Justieraufwand kann vermieden werden, wenn zwei Sätze von jeweils um ein Zentrum herum angeordneten Detektorelementen mit zugehöriger Blendenöffnung in Sicht längs der Haupteinfallsachse verschachtelt werden. Es werden also längs der Haupteinfallsachse der Laserstrahlung eine erste Blendenöffnung, dahinter ein erster Satz von mindestens drei kreisförmig angeordneten Detektorelementen, dahinter eine zweite Blendenöffnung und schließlich ein zweiter Satz von mindestens drei um ein Zentrum herum angeordneten Detektorelementen aufgereiht. In einer Projektion längs der Haupteinfallsachse sind die Blendenöffnungen und die Sätze von Detektorelementen in dem Sinne konzentrisch angeordnet, daß die Zentren auf der Haupteinfallsachse hintereinander liegen. Die erste Blendenöffnung und der erste Satz umgibt dabei in dieser Projektion die zweite Blendenöffnung und den zweiten Satz, d. h. die zweite Blendenöffnung und der zweite Satz liegen in einem frei gelassenen Bereich zwischen dem ersten Satz der Detektorelemente. Verwendet man für die beiden Sätze Detektorelemente unterschiedlicher spektraler Empfindlichkeit, sorgt die längs der dann nur noch einzigen Haupteinfallsachse verschachtelte Anordnung automatisch dafür, daß ein spektraler Fehler bei der Richtungsangabe minimiert ist. Zudem ist ein kompakter Aufbau erzielt, der beispielsweise in ein bekanntes TO-Gehäuse paßt.

Eine besonders große spektrale Bandbreite erreicht man, wenn man für einen der Sätze Silizium-Photoempfänger und für den anderen der Sätze Indium-Gallium-Arsenid-Photoempfänger verwendet. Dann kann vorteilhafterweise auch ausgenutzt werden, daß Indium-Gallium-Arsenid-Photoempfänger bei gleicher Empfindlichkeit kleiner als Silizium-Photoempfänger ausgelegt werden können und somit gut die Lücke zwischen den Silizium-Photoempfängern abdecken können.

Eine besonders gute Winkelauflösung ergibt sich, wenn die Blendenöffnung in einem Abstand zur Ebene der Detektorelemente liegt, die der halben Breite der Detektorelemente mal dem Cotangens des halben Soll-Winkelmeßbereichs, der erfaßt werden soll, entspricht. Bei der Verwendung von optisch brechendem Flächenaufbau, z. B. zwischen Blendenöffnung und Detektorelementen, ist die Brechungswirkung entsprechend zu berücksichtigen, was durch einen entsprechenden Zuschlag in der Höhe erfolgen kann.

Es versteht sich, daß die vorstehend genannten und die nachstehend noch zu erläuternden Merkmale nicht nur in den angegebenen Kombinationen, sondern soweit technisch möglich auch in anderen Kombinationen oder in Alleinstellung einsetzbar sind, ohne den Rahmen der vorliegenden Erfindung zu verlassen. Auch ist eine Beschreibung der Erfindung in Verbindung mit Laserstrahlung nur exemplarisch und nicht einschränkend zu verstehen.

Nachfolgend wird die Erfindung beispielsweise anhand der beigefügten Zeichnungen, die auch erfindungswesentliche Merkmale offenbaren, noch näher erläutert. Es zeigen:

Fig. 1 schematische eine Draufsicht auf einen Laserstrahlungsdetektor 1 einer ersten Bauweise, der zu einer Vorrichtung zum Erkennen und Lokalisieren von Laserstrahlungsquellen Verwendung finden kann,

Fig. 2 eine Schnittdarstellung entlang der Linie A-A der Figur 1,

Fig. 3 eine zweite Bauweise eines Laserstrahlungsdetektors, der in der Vorrichtung verwendet werden kann,

Fig. 4 eine Schnittdarstellung entlang der Linie B-B der Figur 3,

Fig. 5 eine Vorrichtung zum Erkennen und Lokalisieren von Laserstrahlungsquellen, die Laserstrahlungsdetektoren gemäß Figur 1 umfaßt,

Fig. 6 einen exemplarischen Verlauf einer Autokorrelationsfunktion, die für die Beabstandung der Laserstrahlungsdetektoren in der Vorrichtung relevant ist,

Fig. 7 eine schematische Draufsicht auf eine Vorrichtung zum Erkennen und Lokalisieren von Laserstrahlungsquellen zur Veranschaulichung der räumlichen Anordnung der darin vorgesehenen Laserstrahlungsdetektoren,

Fig. 8 einen Winkelfehler bei einem quadratischen Raster von vier Einzel-Laserstrahlungsdetektoren als Funktion des Abstandes der Zentren der Laserstrahlungsdetektoren,

Fig. 9-11 verschiedene Muster zur rasterartigen Anordnung von Laserstrahlungsdetektoren, und

Fig. 12 eine Draufsicht auf eine Spektralinformation bereitstellende Vorrichtung ähnlich der Figur 7.

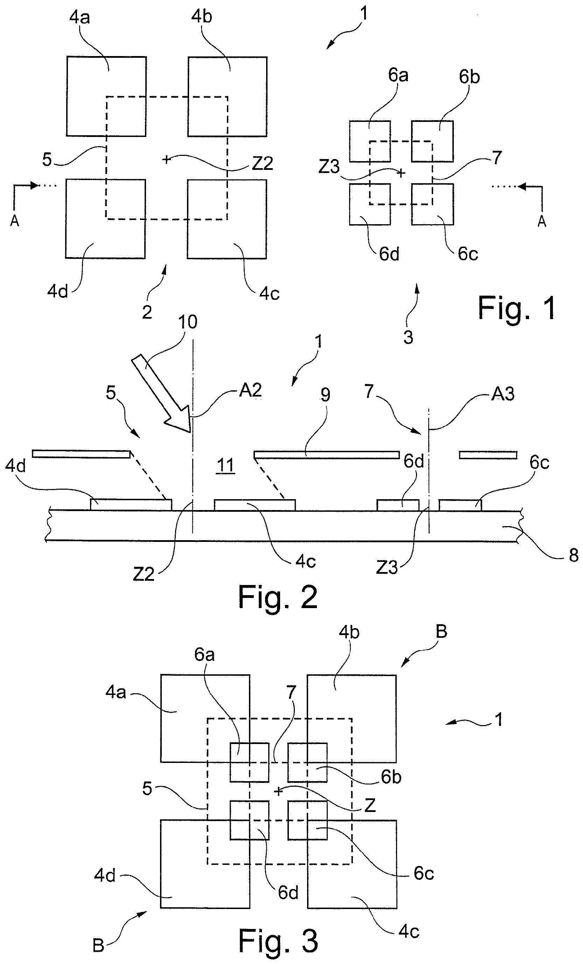

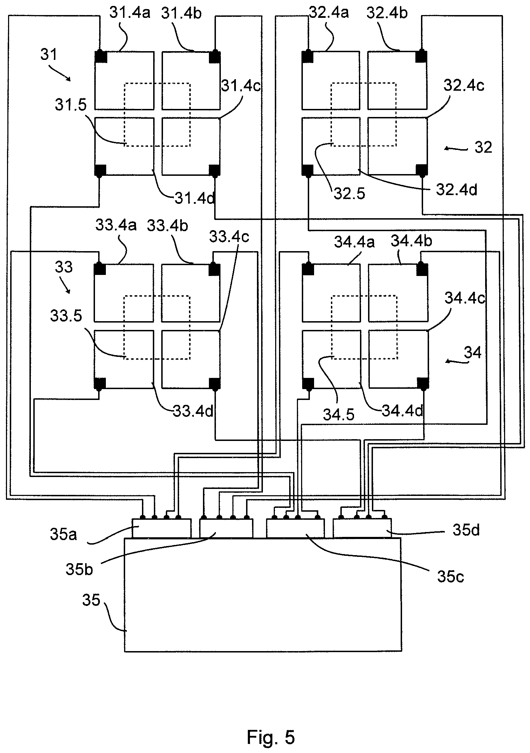

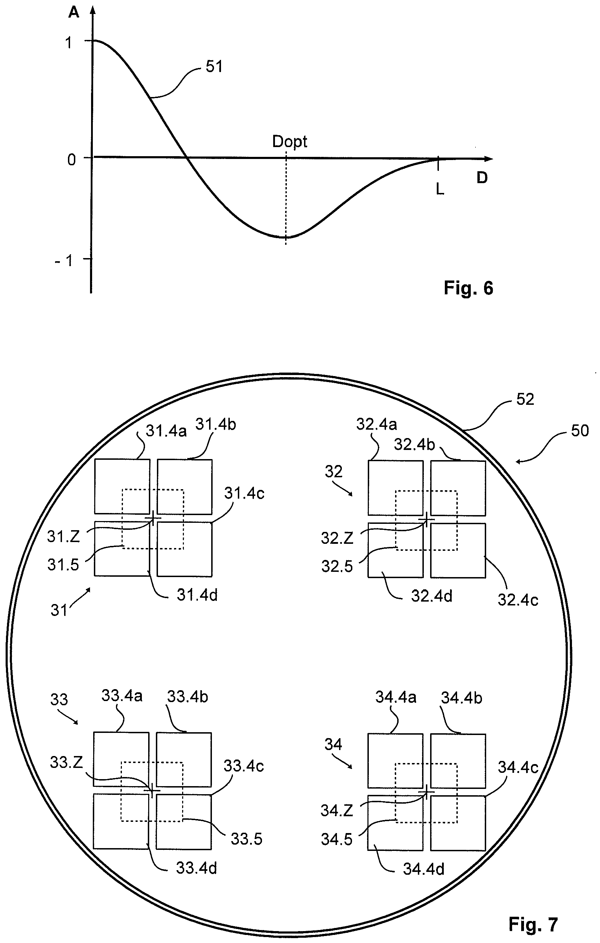

Nachfolgend wird eine Vorrichtung zum Erkennen und Lokalisieren von Laserstrahlungsquellen beschrieben. Diese Vorrichtung umfaßt, wie nachfolgend anhand der Figuren 5 und 7 noch eingehend erläutert wird, mehrere Laserstrahlungsdetektoren. Die Figuren 1 bis 4 zeigen Darstellungen zur Erläuterung zweier möglicher Ausführungsformen dieses Laserstrahlungsdetektors.

Figur 1 zeigt schematisch eine Draufsicht auf einen exemplarischen Laserstrahlungsdetektor 1. Dieser umfaßt zwei Detektorgruppen 2 und 3, nämlich eine Silizium-Detektorgruppe 2 und eine Indium-Gallium-Arsenid-(InGaAs)-Detektorgruppe. Jede Detektorgruppe umfaßt vier einzelne Detektoren, wobei sowohl die Zahl der Detektoren, als auch deren geometrische Ausbildung rein exemplarisch ist. Die Silizium-Detektorgruppe 2 weist im Ausführungsbeispiel vier Silizium-Photoempfänger 4a-d auf, die um ein Zentrum Z2 herum kreisförmig angeordnet sind. In einer gleichen Anordnung um ein Zentrum Z3 liegen die vier InGaAs-Photoempfänger der InGaAs-Detektorgruppe 3. Die Detektorgruppen 2, 3 stellen jeweils Detektoreinrichtungen dar, und die Detektoren 4a-d; 6a-d sind Detektorelemente. Die in den Figuren dargestellten Lücken zwischen den Detektoren sind lediglich der besseren Erkennbarkeit wegen vorhanden. Tatsächlich wird man meist solche Lücken zu vermeiden suchen, z. B. indem die Photoempfänger auf einem gemeinsamen Halbleitersubstrat aufgebaut werden.

Über der Silizium-Detektorgruppe 2 befindet sich eine Blende, die eine Blendenöffnung 5 hat, welche in Figur 1 durch eine gestrichelte Linie schematisch verdeutlicht ist. Die Blendenöffnung 5 liegt mittig über dem Zentrum Z2 und läßt in senkrechter Draufsicht, wie sie die Figur 1 zeigt, nur einen Teil jedes darunter liegenden Silizium-Photoempfängers 4a-d frei.

Auf gleiche Weise befindet sich auch über der InGaAs-Detektorgruppe 3 eine Blende mit einer Blendenöffnung 7, die zentral zum Zentrum Z3 angeordnet ist.

Die Lage der Blendenöffnungen zu den Photoempfängern ist in Figur 2 gut zu erkennen, die eine Schnittdarstellung durch die Linie A-A der Figur 1 zeigt. Da in allen Figuren sich strukturell oder funktionell entsprechende Bauteile mit denselben Bezugszeichen versehen sind, kann auf eine Wiederholung der entsprechenden Beschreibung verzichtet werden.

In Figur 2 ist zusätzlich noch für jede Detektorgruppe eine Hauptachse A2 bzw. A3 zu sehen, die durch das jeweilige Zentrum Z2, Z3 läuft. Die Hauptachsen und Zentren sind in Figur 2 eingetragen, obwohl sie eigentlich nicht in der Schnittlinie A-A liegen. Die Eintragung soll das Verständnis der Funktionsweise des Laserstrahldetektors 1 erleichtern.

Figur 2 zeigt weiter, daß die Blendeneinrichtung 9, welche die Blendenöffnungen 5 und 7 bereitstellt, längs der Haupteinfallsachsen im Abstand zu den Detektorgruppen 2 und 3 liegt. Dabei ist in Figur 2 schematisch der Abstand für beide Detektorgruppen gleich. Dies ist jedoch nicht zwingend der Fall; vielmehr kann es vorteilhaft sein, die Höhe der Blende über der jeweiligen Detektorgruppe so zu wählen, daß sie dem Produkt aus halber Breite eines einzelnen Photoempfängers und dem Cotangens des halben gewünschten Winkelmeßbereichs für die Richtung einer Laserstrahlungsquelle entspricht.

Die zwei Detektorgruppen 2 und 3, welche für den Laserstrahlungsdetektor 1 eingezeichnet sind, haben unterschiedliche spektrale Empfindlichkeiten aufgrund der unterschiedlichen Halbleiterelemente, Silizium einerseits und InGaAs andererseits. Die Verwendung zweier unterschiedlicher Detektorgruppen 2, 3 hat nicht nur den Vorteil, daß eine größere spektrale Bandbreite erreicht werden kann, es ist auch möglich, eine Aussage über die spektrale Zusammensetzung der detektierten Laserstrahlung zu treffen. Dazu werden die jeweils für sich detektierten Signale der zwei Detektorgruppen zueinander ins Verhältnis gesetzt. Zweckmäßigerweise wird man dazu die Signalamplituden der jeweiligen Detektorgruppen aufsummieren, jedoch sind auch andere Vergleiche möglich.

Die Verwendung zweier Detektorgruppen 2 und 3 ist jedoch selbstverständlich optional, insbesondere wenn die spektrale Bandbreite oder die Spektralinformation nicht von Relevanz ist. In einem solchen Fall besteht dann der Laserstrahlungsdetektor 1 nur aus einer Detektorgruppe 2 oder 3. Soweit hier ein Laserstrahlungsdetektor 1 geschildert ist, der aus zwei Arten von Detektorgruppen aufgebaut ist, ist dies nur exemplarisch zu verstehen.

Zur Verdeutlichung der Funktion des Laserstrahldetektors 1 ist in Figur 2 schematisch eine Einfallsrichtung 10 für eine zu detektierende Laserstrahlung eingetragen. Die Einfallsrichtung 10 führt dazu, daß sich die Schattenkanten der Blendenöffnung 5 über den darunterliegenden Photoempfängern (in Figur 2 sind hier exemplarisch die Photoempfänger 4c, 4d eingezeichnet) verschieben. Der Photoempfänger 4d wird aufgrund der schräg einfallenden Laserstrahlung geringer beleuchtet, der Photoempfänger 4c stärker. Durch die derart bewirkte Verschiebung eines ausgeleuchteten Feldes 11 tritt eine Verstimmung der Photoempfänger 4a-4d auf. Durch Auswertung dieser Verstimmung kann die Einfallsrichtung 10 präzise bestimmt werden.

Dazu werden die Signale der Photoempfänger 4a-4d geeignet ausgewertet. Ein Wert für den Azimutwinkel ergibt sich aus der Differenz der Signalamplitudensummen gegenüberliegender Photoempfänger. Ein Wert für den Elevationswinkel ergibt sich aus der Differenz der Amplitudensummen benachbarter Photoempfänger. Zweckmäßigerweise wird man beide Werte durch die Gesamtsumme der Signalamplituden dividieren.

Das anhand der Silizium-Detektorgruppe 2 erläuterte Vorgehen gilt natürlich gleichermaßen auch für die InGaAs-Detektorgruppe 3.

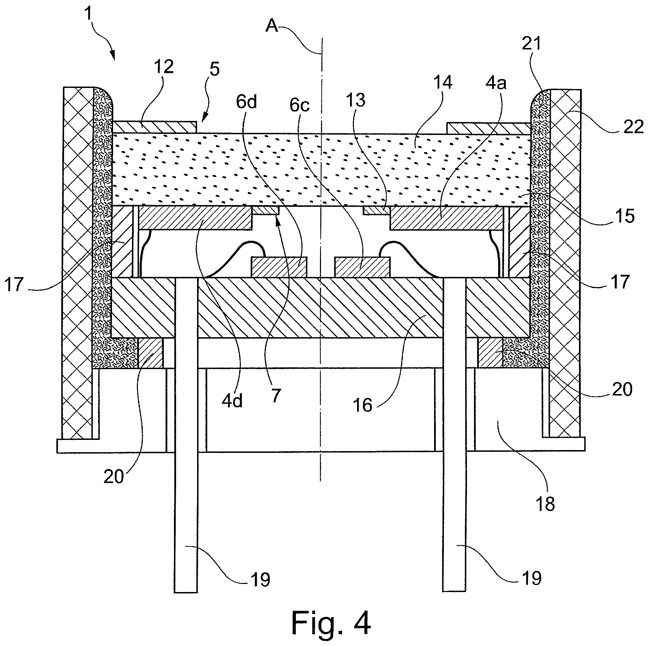

Figur 3 zeigt ein weiteres Ausführungsbeispiel für einen Laserstrahlungsdetektor 1. In der Bauweise der Figur 3 sind die zwei Detektorgruppen 2, 3 und ihre zugehörigen Blendenöffnungen 5, 7, die in Figur 1 nebeneinander angeordnet waren, konzentrisch um ein gemeinsames Zentrum Z angeordnet. Diese Bauweise nutzt zum einen vorteilhaft aus, daß die InGaAs-Photoempfänger 6a-d meistens kleiner sind, als die Silizium-Photoempfänger 4a-d. Zum anderen erreicht die Bauweise der Figur 3 einen kompakteren Aufbau, der in ein TO-Gehäuse paßt, wie es die Schnittdarstellung der Figur 4 zeigt.

Die Schnittdarstellung läßt weiter erkennen, daß die zwei Detektorgruppen mit den zugehörigen Blendenöffnungen längs der Haupteinfallsrichtung A verschachtelt sind. In Richtung der einfallenden Strahlung liegt zuerst eine Blende 12, die die Blendenöffnung 5 bereitstellt. Daran schließt in Einfallsrichtung die Silizium-Detektorgruppe an, von der in der Schnittdarstellung die Silizium-Photoempfänger 4c, 4d eingezeichnet sind. Die Photoempfänger selbst können dabei bereits als Blende für die nochmals tiefer liegende InGaAs-Detektorgruppe dienen, von der in der Schnittdarstellung der Figur 4 die InGaAs-Photoempfänger 6c, d dargestellt sind. Wie die Draufsicht der Figur 3 zeigt, ist jedoch noch eine zusätzliche Blende 13 erforderlich, um die Blendenöffnung 7 vollständig zu begrenzen.

Im Aufbau der Figur 4 ist die Blende 12 als strukturierte Metallschicht auf der Oberseite eines ersten Glasträgers 14 realisiert. Die vier Photoempfänger 4a-d der Silizium-Detektorgruppe 2 sind auf der Unterseite eines zweiten Glasträgers 15 angebracht. Die Unterseite dieses zweiten Glasträgers 15 ist dabei mit einer strukturierten Metallschicht versehen, welche die zweite Blende 13 realisiert und zugleich über den aktiven Flächen der Photoempfänger 4a-d geöffnet ist. Zudem bildet diese auf dem zweiten Glasträger 15 ausgebildete Blende 13 die zweite Blendenöffnung 7.

Der Abstand zwischen erster Blendenöffnung 5 und Silizium-Detektorgruppe 2 (Silizium-Photoempfänger 4a-d) wird über die Dicke der Glasträger 14, 15 eingestellt. Bei der Wahl der Dicke wird ein Brechungseffekt, der an den Glasträgeroberflächen auftritt, berücksichtigt, um einen gewünschten optischen Abstand zu realisieren.

Die InGaAs-Photoempfänger 6a-d sind ihrerseits auf einer Leiterplatte 16 angeordnet, die zudem die elektrischen Kontakte aller Photoempfänger sammelt. Die Leiterplatte 16 ist auf einem TO-Boden 18 befestigt, durch den Signalleitungen 19 nach außen geführt werden. Insgesamt sind neun Signalleitungen vorhanden, um die Signale von den vier Silizium-Photoempfängern 4a-d, den vier InGaAs-Photoempfängern 6a-d sowie eine gemeinsame Rückleitung bereitzustellen.

Der Abstand zwischen den InGaAs-Photoempfängern und der Blendenöffnung 7 ist durch Abstandshalter 17 eingestellt. Weitere Abstandshalter 9 realisieren einen Abstand zwischen der Unterseite der Leiterplatte 16 und dem TO-Boden 18. Der gesamte Aufbau ist mittels eines Vergusses 21 in eine Gehäusewand 22 eingesetzt, die über den TO-Boden 18 gesetzt ist.

Die Funktionsweise des Aufbaus der Figuren 3, 4 entspricht dem der Figuren 1 und 2, mit dem Unterschied, daß es nur eine einzige Haupteinfallsachse A gibt. Etwaige örtliche Fluktuationen der einfallenden Laserstrahlung haben deshalb andere, ggf. geringere Auswirkungen.

Um einfallende Laserstrahlung mit einem sehr geringen Winkelfehler zu detektieren, werden mehrere Laserstrahlungsdetektoren nebeneinander angeordnet. Dabei kann es sich natürlich, wie bereits erwähnt, entweder um Laserstrahlungsdetektoren 1 handeln, die zwei Detektorgruppen unterschiedlicher Art (z. B. Silizium und InGaAs) aufweisen, oder aber auch um einen Laserstrahlungsdetektor, der nur über eine Detektorart verfügt. Bereits zwei Einzel-Laserstrahlungsdetektoren führen zur Winkelfehlerreduzierung.

Figur 5 zeigt schematisch eine Draufsicht auf eine Vorrichtung zum Erkennen und Lokalisieren von Laserstrahlungsquellen, die exemplarisch vier Laserstrahlungsdetektoren 31, 32, 33, 34 umfaßt, die jeweils der Detektorgruppe 2 der Figur 1 entsprechen. Die Detektorgruppe 3 der Figur 1 ist in der Bauweise der Figur 5 nicht dargestellt. Natürlich können die Detektorgruppen 3 selbstverständlich ebenfalls im Detektorfeld, das die Vorrichtung der Figur 5 umfaßt, enthalten sein. Das Detektorfeld ist hier exemplarisch ein quadratisches Muster.

Der wesentliche Aspekt der Figur 5 ist, daß die Vorrichtung mehrere Laserstrahldetektoren 31-34 umfaßt, die im Ausführungsbeispiel jeweils vier Einzeldetektoren (gekennzeichnet durch die Anfügung .4a bis .4d) aufweisen. Die Einzeldetektoren entsprechen den Detektoren 4a bis 4d der Figur 1. Wie bereits anhand dieser Figur erläutert, hängt die Signalamplitude jedes einzelnen Detektors davon ab, wie stark dieser Detektor mit Strahlung beleuchtet ist. Ist ein Detektor stark abgeschattet, fällt die Strahlung vergleichsweise stark aus dem Quadranten ein, in dem der Detektor liegt.

Zur Unterdrückung von Flimmern der detektierten Laserstrahlung werden deshalb die Signale der den einzelnen Quadranten zugeordneten Detektoren 31.4a-d, 32.4a-d, 33.4a-d und 34.4a-d so zusammengefaßt, daß demselben Quadranten entsprechende Detektorensignale addiert werden. Die Detektoren 31.4a, 32.4a, 33.4a und 34.4a sind deshalb mit einem Summierknoten 35a einer Auswerteeinheit 35 verbunden. Dieser Knoten addiert die Signale der Einzeldetektoren. Analoges geschieht mit den Signalen der den Quadranten b, c und d zugeordneten Detektoren, für die Summierknoten 35b, 35c und 35d vorgesehen sind.

Nach dem auf diese Art und Weise erfolgten quadrantenweise Zusammenfassen der Einzelsignale ermittelt die Auswerteeinrichtung 35 die Richtung, aus der die detektierte Laserstrahlung einfiel. Dabei kann ein erster Winkel (der sog. Azimutwinkel) besonders vorteilhaft durch die Gleichung $A = (Sa+Sd-Sb-Sc)/(Sa+Sb+Sc+Sd)$ und ein zweiter Winkel (der sog. Elevationswinkel) durch die Gleichung $E = (Sa+Sb-Sc-Sd)/(Sa+Sc+Sb+Sd)$ berechnet werden. Die Signale Sa-Sd entstammen dabei den Additionsknoten 35a-d, entsprechen also den zusammengefaßten Gesamtsektorsignalen, welche aus den Signalen aller entsprechenden Einzel-Detektoren 4a bis 4c erhalten wurden.

Die anhand der Figur 5 geschilderte quadrantenrichtige Zusammenfassung der Einzelsignale aus den Detektorgruppen des Laserstrahldetektors ist natürlich nicht auf die in Figur 5 gezeigte Anordnung oder Bauweise beschränkt. Vielmehr ist gleiches natürlich auch möglich, indem mehrere, beispielsweise vier Laserstrahldetektoren 1 gemäß Figur 1 oder Figur 3 verwendet werden. Auch können natürlich Laserstrahldetektoren verwendet werden, die eine andere Bauweise als in den Figuren 1 bis 4 dargestellt haben. Insbesondere ist es möglich, eine andere Anzahl an Sektoren zu verwenden. Möglich sind z. B. lediglich drei Sektoren, beispielsweise indem bei der Bauweise der Figur 1 der Einzeldetektor 4d und/oder 6d weggelassen wird. Optional kann dann eine runde Blendenöffnung 5 bzw. 7 verwendet werden und der Detektor 4a bzw. 6a so nach unten gerückt werden, daß er mittig zum Zentrum liegt.

Zum Erfassen der Richtung der einfallenden Laserstrahlung mit einem geringen Winkelfehler ist es zu beachten, daß die Laserstrahlung in der Regel vor der Detektion diversen Streuprozessen unterworfen ist. Diese führen dazu, daß die Intensität der Laserstrahlung über den Strahlquerschnitt nicht homogen ist, sondern fluktuiert. Man spricht in diesem Zusammenhang auch vom Flimmern der Laserstrahlung. In der Vorrichtung gemäß Figur 5 sind deshalb mehrere einzelne Laserstrahlungsdetektoren 31 bis 34 vorgesehen, die räumlich beabstandet sind. Die quadrantenrichtige Zusammenfassung der Einzelsignale dieser Laserstrahlungsdetektoren erreicht eine bessere Unempfindlichkeit der Vorrichtung gegenüber dem Flimmern des Laserstrahls.

Betrachtet man das Flimmern des Laserstrahls als statistischen Prozeß, zeigt sich, daß es eine charakteristische Länge gibt, welche angibt, inwieweit die Intensität im Strahlquerschnitt statistisch korreliert ist. Mit anderen Worten, innerhalb der charakteristischen Länge ist es unwahrscheinlich, eine Intensitätsabweichung vorzufinden, die über ein bestimmtes Maß hinausgeht. Diese charakteristische Länge kann aus der Autokorrelationsfunktion des Flimmerns bzw. der Intensitätsschwankungen über den Querschnitt ermittelt werden.

Zur Verringerung des Winkelfehlers könnte man daran denken, die Laserstrahlungsdetektoren so weit auseinander zu rücken, daß ihr Abstand mindestens gleich der charakteristischen Länge ist. Die einzelnen Laserstrahlungsdetektoren würden dann bezüglich des Intensitätsflimmerns statistisch unabhängige Regionen innerhalb des Laserstrahlungsquerschnittes erfassen. Eine soche statistische Unabhängigkeit verbessert bekanntermaßen den Fehler, der hier der Winkelmeßfehler ist, bei n Detektoren um den Faktor $\sqrt{n}/n$. Um diesen Verbesserungsfaktor zu realisieren, müßte man die einzelnen Laserstrahlungsdetektoren in einen Abstand zueinander bringen, der mindestens die charakteristische Länge oder sogar größer ist.

Betrachtet man jedoch die Autokorrelationsfunktion A des Intensitätsgradienten dl/dD, die in Figur 6 als Funktion des Abstandes D in einer Richtung quer zur Einfallsrichtung des Laserstrahls eingezeichnet ist, zeigt sich jedoch, daß es einen optimalen Abstand gibt, bei dem der Winkelfehler stärker gemindert wird, als um den Faktor $\sqrt{n}/n$. Die Autokorrelationsfunktion A, die in Form der Kurve 51 in Figur 6 eingezeichnet ist, beginnt bei einem Abstand von 0 selbstverständlich mit einem Wert von 1. Am Ort eines ersten von mehreren Laserstrahlungsdetektoren ist selbstverständlich die Intensitätsschwankung voll zu sich selbst korreliert. Bei einem Abstand, der oberhalb der charakteristischen Länge L liegt, ist der Intensitätsgradient völlig unkorreliert. Dies ist die asymptotische Annäherung der Kurve 51 an die x-Achse und entspricht dem Verbesserungsfaktor $\sqrt{n}/n$. Nicht zuletzt aus Normierungsgründen hat die Autokorrelationsfunktion A des Intensitätsgradienten dl/dD einen Nulldurchgang. Für D-Werte oberhalb dieses Nulldurchgangs hat die Kurve 51 einen Abschnitt, der unterhalb der Nullinie verläuft. In diesem Abschnitt findet man konsequenterweise Winkelfehler, die in entgegengesetzte Richtungen laufen, als die Winkelfehler, die im D-Wertebereich zwischen 0 und dem Nulldurchgang der Kurve 51 liegen. Wählt man nun den in Figur 6 eingezeichneten Abstand Dopt als Abstand für zwei Laserstrahlungsdetektoren, so zeigen die Messungen mit diesen Laserstrahlungsdetektoren in entgegengesetzte Richtungen weisende Winkelfehler, also sich zumindest teilweise aufhebende Winkelfehler.

Dies hat zum Ergebnis, daß bei zwei derart angeordnete Laserstrahlungsdetektoren der Gesamtwinkelfehler des daraus ermittelten Winkelsignals gegenüber der Verwendung eines einzelnen Laserstrahlungsdetektors durch diese Maßnahme deutlich reduziert ist, insbesondere stärker als um $\sqrt{2}/2$.

Der Abstandswert Dopt hängt natürlich vom Verlauf der Autokorrelationsfunktion A ab. Er wird jedoch immer in einem Bereich liegen, in dem die Intensitätsschwankungen noch örtlich korreliert sind, also bei Abständen der Detektorzentren, die weniger als die charakteristische Länge betragen. Auch sollte er in einem Bereich liegen, in dem die Kurve 51 bereits negative Werte der Autokorrelationsfunktion zeigt. Dies ist für einige Anwendungen oberhalb von 15 % der charakteristischen Länge der Fall.

Eine präzise Auslegung der Vorrichtung 50 bezogen auf den Abstand der einzelnen Laserstrahlungsdetektoren kann somit dadurch erhalten werden, daß die Autokorrelationsfunktion für eine gegebene Applikation bestimmt wird; z. B. indem das Beleuchtungsfeld eines Laserstrahls über einen großen Abstand hinsichtlich seiner Intensitätsschwankungen vermessen wird. Daraus wird die Autokorrelationsfunktion ermittelt. Alternativ gibt es in der Literatur für bestimmte Randbedingungen geltende Werte für die Autokorrelationsfunktion, beispielsweise in W.A. Coles und R.G. Frehlich, "Simultaneous measurements of angular scattering and intensity scintillation in the atmosphere", J. Opt. Soc. Am., Vol. 72, No. 8. August 1982, S. 1042-1048. Aus dem Auftrag der Autokorrelationsfunktion über die gewünschte Koordinate quer zur Ausbreitungsrichtung des Laserstrahls, d. h. für die im Querschnitt liegenden Koordinaten, ergibt sich der optimale Abstand Dopt. Bei üblichen isotropen Verhältnissen ist für eine zweidimensionales Raster der Muster der optimale Abstand in beiden orthogonalen Koordinaten des Strahlungsquerschnittes gleich.

Figur 7 zeigt eine Draufsicht auf eine Vorrichtung 50, die der der Figur 5 ähnelt. Wiederum sind vier einzelne Laserstrahlungsdetektoren 31 bis 34 in einem Raster. Ihre Zentren 31.Z bis 34.Z liegen nun so, daß zwischen horizontal bzw. vertikal benachbarten Laserstrahlungsdetektoren der Abstand Dopt gegeben ist.

Dopt ist dabei im exemplarischen Fall 40 % der charakteristischen Länge von 4 cm. Dies hat den weiteren Vorteil, daß die Vorrichtung 50 in ein TO-Gehäuse 52 eingebaut werden kann. Konkret gelten in einem möglichen Ausführungsbeispiel folgende Werte: Die Kantenlänge jedes einzelnen Photoempfängers 4a-d beträgt 1,6 mm. Der Abstand zwischen den einzelnen Photoempfängern beträgt 0,2 mm. Die Zentren Z befinden sich in einem Rastermaß von 8 mm, was zu einem Abstand zwischen der linken Kante des Laserstrahlungsdetektors 31 und der rechten Kante des Laserstrahlungsdetektors 32 von 4,6 mm führt. Für die horizontalen Abstände gilt das gleiche. Es ist in dieser Ausführungsform also bevorzugterweise realisiert, daß die Lücken zwischen den Laserstrahlungsdetektoren 31 und 34 mindestens so groß sind, wie ein einzelner Laserstrahlungsdetektor. Mit einer derartigen Anordnung erreicht man eine Standardabweichung der Winkelbestimmung von 0,486°; der maximale Winkelfehler beträgt 1,367°.

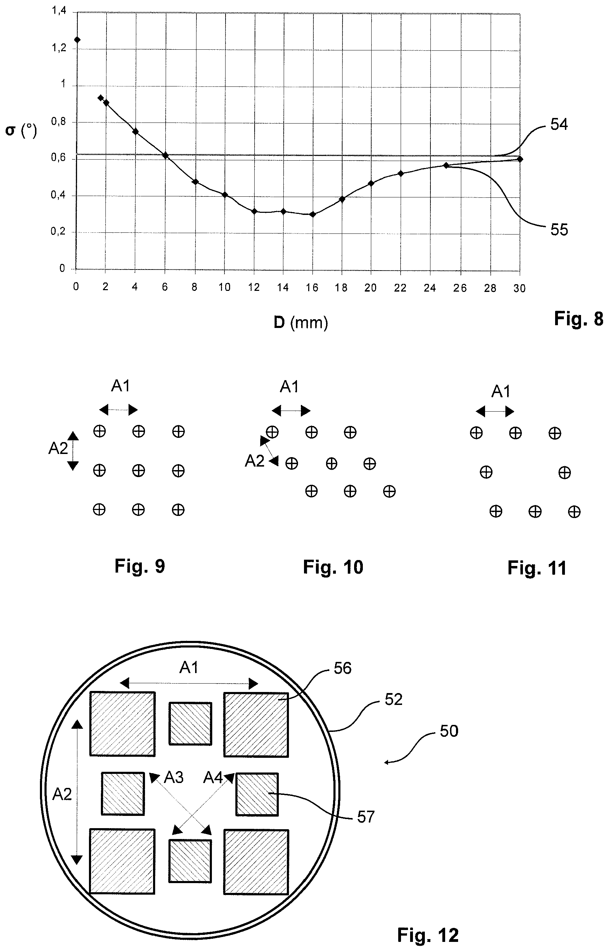

Den vorteilhaften Effekt, daß die Meßgenauigkeit hinsichtlich der Winkelerfassung verbessert ist, wenn Winkelabweichungen unterschiedlicher Einzel-Laserstrahlungsdetektoren im statistischen Mittel in entgegengesetzte Richtungen weisen, zeigen die Kurven der Figur 8. Dort ist die Standardabweichung σ der Winkelbestimmung als Funktion des Rastermaßes und damit des Abstandes der Zentren von vier Einzel-Laserstrahlungsdetektoren 1 aufgetragen. Die einzelnen Photoempfänger der Laserstrahlungsdetektoren 1 haben einen Kantenlänge von 0,8 mm. Zwischen den Photoempfängern besteht eine Lücke von 0,1 mm. Kurve 55 zeigt die Standardabweichung in Grad für verschiedene Mittelpunktabstände, d. h. Abstände D der Zentren der Einzelsensoren. Die Gerade 54 wäre die Standardabweichung bei unkorrelierter statistischer Mittelung. Aus dem Vergleich der Kurven 55 und 54 wird folgendes deutlich:

Möglichst dicht gepackte Einzel-Laserstrahlungsdetektoren führen zu einem deutlich schlechteren Ergebnis, als eine reine statistische Mittelung. Dies zeigt der Fehlerwert für den am weitesten links liegende Punkt der Kurve 55, bei dem die Einzel-Laserstrahlungsdetektoren in einem Abstand von 1,7 mm liegen.

Bei Abständen von größer als 30 mm, also im Bereich der charakteristischen Länge von 35-40 mm, besteht keine Korrelation mehr und die Standardabweichung erreicht den Wert der statistischen Mittelung, wie auch für unabhängige Einzelmessungen nicht weiter überraschend.

Bei Mittelpunktsabständen D zwischen 6 mm und 25 mm führt die Korrelation zu deutlich kleineren Gesamtwinkelmeßfehlern als für eine statistische Mittelung erreichbar wären. Der Grad der durch die Abstandswahl erreichbaren Verbesserung hängt natürlich von der Art der Störungen ab, welche die Laserstrahlung vor ihrer Detektion erfährt, also üblicherweise vom Turbulenzgrad der Atmosphäre. Weitere Einflußparameter sind der Abstand der Laserquelle vom Detektionsort und natürlich die Wellenlänge der verwendeten Strahlung. Ein Mittelpunktabstandsbereich von 6 bis 25 mm, d. h. von 15 % bis 60 % der charakteristischen Länge führt jedoch in allen praktischen Fällen zu einer Verbesserung, wie der Verlauf der Kurve 52 zeigt.

Der Abstand der Zentren unter dem Maß, das für eine statistische Entkopplung nötig ist, hat darüber hinaus den Vorteil, daß die Vorrichtung zur Ermittlung und Lokalisierung von Laserstrahlung deutlich kleiner baut. Dies ist sowohl aus Sicht der Herstellung wie auch unter Applikationsgesichtspunkten (geringerer benötigter Bauraum zum Einbauen der Vorrichtung) vorteilhaft.

Für das Abstandsmaß kommt es natürlich auf die horizontale bzw. vertikale Beabstandung an, wobei diese Orthogonalität sich in der Orthogonalität des zu erfassenden Winkels, beispielsweise Elevationswinkel und Azimutwinkel widerspiegelt. Bei einer nicht orthogonalen Lage der zu ermittelnden Winkel sind auch die Abstände bzw. das Rastermaß entsprechend passend (da nicht orthogonal) zu wählen.

Die Figuren 9 bis 11 zeigen verschiedene Beispiele für Raster bzw. Muster, in denen die Einzel-Laserstrahlungsdetektoren angeordnet sind. Durch ein im Kreis befindliches Kreuz ist dabei jeweils das Zentrum eines Laserstrahlungsdetektors symbolisiert. Figur 9 zeigt ein quadratisches Muster, wie es in den Figuren 5 und 7 vorlag, hier jedoch mit neun Einzel-Laserstrahlungsdetektoren. Im quadratischen Muster ist der horizontale Abstand A1 gemäß der oben bestimmten Bemessungsregel gewählt, beträgt also zwischen 15 % und 60 % der charakteristischen Länge L. Der vertikale Abstand A2 hat das gleiche Maß. In Abwandlung hiervon sind natürlich auch rechteckige Muster möglich, bei denen die Werte für A1 und A2 innerhalb der gegebenen Vorgaben variieren.

Figur 10 zeigt ein Muster, das auf einem nicht rechtwinkligen Raster beruht. Die einzelnen Zentren sind in Zeilen angeordnet. Innerhalb einer Zeile liegen die Zentren im Abstand A1. Die vertikal untereinander liegenden Zeilen sind in horizontaler Richtung um einen halben Abstand A1 verschoben. Die Abstände zwischen den Zeilen sind nun so gewählt, daß unmittelbar benachbarte Zentren unterschiedlicher Zeilen zueinander wiederum einen Abstand A2 haben, der der oben genannten Bemessungsregel entspricht und im Beispiel der Figur 10 sogar identisch ist zum Abstand A1 in horizontaler Richtung. Die Grundzelle dieses Musters ist also, anders als in Figur 9, kein Quadrat, sondern ein Dreieck. Zur Reduktion des Winkelfehlers ist es jedoch nicht zwingend erforderlich, daß auch das Maß A1 in diesem dreieckigen Muster, d. h. mit nicht vertikal untereinander liegenden Zentren, der Bemessungsregel entspricht. Es genügt vielmehr, wenn die Mindestdistanz im Raster der Abstandsbemaßungsregel folgt.

Figur 11 zeigt ein weiteres mögliches Muster, in dem nur noch der in diesem Fall horizontale Abstand A1 der Abstandsbemessungsregel genügt. Auch ist das Muster so ausgebildet, daß ein oder mehrere Plätze für einen Laserstrahlungsdetektor ausgelassen sind, im Beispiel der Figur 11 der zentral liegende Laserstrahlungsdetektor.

Die Abstände zwischen einzelnen Laserstrahlungsdetektoren sind auf die Laserstrahlungsdetektoren, deren Signal quadrantengerecht zusammengefaßt wird, also z. B. die Laserstrahlungsdetektoren einer Art, d. h. einer spektralen Empfindlichkeit, zu beziehen. Die Lücken zwischen den Laserstrahlungsdetektoren einer Art können dazu ausgenutzt werden, um unabhängig ausgewertete Laserstrahlungsdetektoren, z. B. die einer anderen Art, dazwischen anzuordnen. Beispielsweise können in die horizontalen und vertikalen Lücken der Laserstrahlungsdetektoren 31 bis 34 der Figur 7, welche Silizium-Photoempfänger haben, InGaAs-basierte Laserstrahlungsdetektoren angeordnet werden. Man erhält dann einen besonders kompakten Aufbau einer breitbandigen und auch Spektralinformation liefernden Vorrichtung zur Detektion und Lokalisierung von Laserstrahlung.

Figur 12 zeigt schematisch in Draufsicht eine solche Vorrichtung 50, bei der zwei unterschiedliche Arten von Laserstrahlungsdetektoren vorhanden sind. Laserstrahlungsdetektoren 56 einer ersten Art basieren auf einem ersten Halbleiter, wohingegen Laserstrahlungsdetektoren 57 einer zweiten Art auf einem zweiten Halbleiter basieren. Beispielsweise können die Laserstrahlungsdetektoren 56 siliziumbasiert sein, die Laserstrahlungsdetektoren 57 InGaAs verwenden. Die Laserstrahlungsdetektoren sind in einem quadratischen Muster angeordnet, wobei die Laserstrahlungsdetektoren 56 in einem horizontalen Abstand A1 und einem vertikalen Abstand A2 zueinander liegen, der 16 mm beträgt. Weiter ist jeder Laserstrahlungsdetektor auf einem eigenen Halbleitersubstrat angeordnet, und die derart vorliegenden acht Laserstrahlungsdetektoren 56 bzw. 57 sind in ein TO-Gehäuse 52 eingebaut, beispielsweise ein TO-3, TO-100 etc. In die Lücken zwischen den Laserstrahlungsdetektoren 56 sind die Laserstrahlungsdetektoren 57 gesetzt. Die Laserstrahlungsdetektoren 57 liegen also ebenfalls in einem quadratischen Muster, wobei die Abstandsmaße A3 und A4 bei den Laserstrahlungsdetektoren 57 in um 45° gedrehten Richtungen gegenüber den Abstandsmaßen A1 und A2 der Laserstrahlungsdetektoren 5 6zu verstehen sind. Mit anderen Worten: Die Horizontale bzw. das Raster der Laserstrahlungsdetektoren 57 ist gegenüber der Horizontalen bzw. dem Raster, welche(s) für die Laserstrahlungsdetektoren 56 zur Abstandsbemessung relevant ist, um 45° gedreht.

Der Aufbau der Figur 12 hat den Vorteil, daß nicht nur eine Winkelangabe, sondern auch eine Spektralinformation über die Laserstrahlung gewonnen werden kann, indem die Laserstrahlungsdetektoren 56 getrennt von den Laserstrahlungsdetektoren 57 ausgelesen und erst danach die Signale zum Gewinnen der Spektralinformation verglichen werden. Unabhängig von dem Gewinnen der Spektralinformation hat die Vorrichtung 50 der Figur 12 natürlich auch eine größere spektrale Bandbreite.

Unabhängig davon verdeutlicht Figur 12 auch, daß die hier geschilderten Abstandsmaße zwischen den einzelnen Laserstrahlungsdetektoren immer auf diejenige Gruppe von Laserstrahlungsdetektoren zu beziehen ist, die quadrantenrichtig zusammengefaßt wird. In der Regel sind dies die Laserstrahlungsdetektoren einer Art.

**Patentansprüche**

1. Vorrichtung zum Lokalisieren von modulierten, optischen Strahlungsquellen, die aufweist:

- mehrere Strahlungsdetektoren (31-34), die für optische Strahlung eines vorbestimmten Strahlungsbereiches empfindlich sind und Detektorelemente (4a-d; 6a-d) aufweisen, welche jeweils Einzelsektorsignale abgeben, die einem Raumsektor zugeordnet sind, aus dem die Strahlung auf den Strahlungsdetektor einfällt, und
- eine Auswerteeinrichtung (35), der die Einzelsektorsignale der Strahlungsdetektoren (31-34) zugeführt sind und die daraus Angaben über die Einfallsrichtung, aus der die optische Strahlung auf die Vorrichtung (50) einfällt, erzeugt,
- wobei für die optische Strahlung eine charakteristische Länge (L) gegeben ist, innerhalb der im Strahlungsquerschnitt auftretende Strahlungsintensitätsschwankungen nicht statistisch unabhängig sind,

**dadurch gekennzeichnet, dass**

- die charakteristische Länge (L) zwischen 3 und 6 cm beträgt,
- zwischen horizontal und/oder vertikal benachbarten Strahlungsdetektoren (31-34) jeweils ein Abstand (Dopt) vorgesehen ist, der größer ist als ein Abstand zwischen den Einzeldetektorelementen (4a-d; 6a-d) und mindestens 15 % der charakteristischen Länge (L) und höchstens 60 % der charakteristischen Länge (L) beträgt, und
- die Auswerteeinrichtung (35) alle dem gleichen Sektor zugeordneten Einzelsektorsignale der Strahlungsdetektoren (31-34) zu einem Gesamtsektorsignal zusammenfasst und aus einer Auswertung der Gesamtsektorsignale die Angaben über die Einfallsrichtung erzeugt.

2. Vorrichtung nach Anspruch 1, **dadurch gekennzeichnet, dass** der Abstand zwischen benachbarten Strahlungsdetektoren (31-34) zwischen 6 und 25 mm beträgt.

3. Vorrichtung nach einem der obigen Ansprüche, **da-**

**durch gekennzeichnet, dass**

- die Detektorelemente (4a-d; 6a-d) jedes Strahlungsdetektors (31-34) um ein Zentrum (.Z) herum angeordnet sind, so dass jedes der Detektorelemente (4a-d; 6a-d) in dem ihm zugeordneten Sektor liegt, und

- jeder Strahlungsdetektor (31-34) in Einfallsrichtung der Strahlung gesehen vor den Detektorelementen eine Blendeneinrichtung aufweist, welche eine Blendenöffnung (5, 7) hat, die mittig über dem Zentrum (Z) und längs der Einfallsrichtung vom Zentrum (Z) beabstandet angeordnet ist und alle Detektorelemente (4a-d; 6a-d) in Sicht auf das Zentrum teilweise überdeckt, so dass die auf jedes Detektorelement (4a-d; 6a-d) fallende Strahlungsintensität von der Einfallsrichtung abhängt.

4. Vorrichtung nach einem der obigen Ansprüche, **dadurch gekennzeichnet, dass** die Strahlungsdetektoren (31-34) auf eigenständigen Halbleitersubstraten aufgebaut sind und der Abstand jeweils durch eine Lücke zwischen den Halbleitersubstraten gebildet ist.

5. Vorrichtung nach einem der obigen Ansprüche, **dadurch gekennzeichnet, dass** zumindest zwei Arten (2, 3) von Strahlungsdetektoren vorgesehen sind, die unterschiedliche spektrale Empfindlichkeit aufweisen, wobei der Abstand und die Horizontallage auf die jeweiligen Arten (2, 3) von Strahlungsdetektoren bezogen sind und vorzugsweise Detektorelemente des Strahlungsdetektoren der einen Art (2) Silizium-Photoempfänger und Detektorelemente des Strahlungsdetektors der anderen Art (3) Indium-Gallium-Arsenid-Photoempfänger sind.

6. Vorrichtung nach den Ansprüchen 5 und 4, **dadurch gekennzeichnet, dass** zwischen zwei Strahlungsdetektoren der ersten Art ein Strahlungsdetektor der zweiten Art liegt.

7. Vorrichtung nach Anspruch 5, **dadurch gekennzeichnet, dass** jeder Strahlungsdetektor (31-34) längs einer Haupteinfallsachse der Strahlung aufgereiht aufweist: eine erste Blendenöffnung (5), einen ersten Satz von mindestens drei um das ein Zentrum herum angeordneten Detektorelementen (4a-d), eine zweite Blendenöffnung (7) und einen zweiten Satz von mindestens drei um ein Zentrum herum angeordneten Detektorelementen (6a-d), wobei in einer Projektion längs der Haupteinfallsachse (A) die Blendenöffnungen (5, 7) und Sätze von Detektorelementen (4a-d; 6a-d) konzentrisch angeordnet sind und die erste Blendenöffnung (5) und der erster Satz (4a-d) in der Projektion längs der Haupteinfallsachse (A) die zweite Blendenöffnung (7) und den zweiten Satz (6a-d) außen umgeben und wobei die Detektorelemente der zwei Sätze unterschiedliche spektrale Empfindlichkeit aufweisen.

8. Vorrichtung nach einem der obigen Ansprüche, **dadurch gekennzeichnet, dass** die Detektorelemente jedes Strahlungsdetektors (31-34) zusammen eine Ausdehnung von mindestens 5-10 % der charakteristischen Länge (L) haben.

9. Vorrichtung nach einem der obigen Ansprüche, **dadurch gekennzeichnet, dass** jeder Strahlungsdetektor vier quadratisch angeordnete Detektorelemente aufweist und dass die Auswerteeinrichtung einen Wert für einen ersten Winkel der einfallenden Strahlung gemäß der Gleichung A = (Sa+Sd-Sb-Sc)/(Sa+Sb+Sc+Sd) und eine Wert für einen zweiten Winkel einfallender Strahlung gemäß der Gleichung E = (Sa+Sb-Sc-Sd)/(Sa+Sb+Sc+Sd) berechnet, wobei Sa-Sd die Einzelsektorsignale sind.

10. Verfahren zum Lokalisieren von modulierten, optischen Strahlungsquellen, wobei mehrere Strahlungsdetektoren (31-34), die für optische Strahlung eines vorbestimmten Strahlungsbereiches empfindlich sind und Detektorelemente (4a-d; 6a-d) aufweisen, die Einzelsektorsignale abgeben, die jeweils einem Raumsektor zugeordnet sind, aus dem die Strahlung auf den Strahlungsdetektor (31-34) einfällt, und aus den Einzelsektorsignalen der Strahlungsdetektoren (31-34) Angaben über die Einfallsrichtung, aus der die Strahlung auf die Vorrichtung (50) einfällt, erzeugt werden, wobei für die optische Strahlung eine charakteristische Länge (L) gegeben ist, innerhalb der im Strahlungsquerschnitt auftretende Strahlungsintensitätsschwankungen nicht statistisch unabhängig sind, **dadurch gekennzeichnet, dass** die charakteristische Länge zwischen 3 und 6 cm beträgt, zwischen horizontal und/oder vertikal benachbarten Strahlungsdetektoren (31-34) jeweils ein Abstand vorgesehen wird, der größer ist als ein Abstand zwischen den Einzeldetektorelementen (4a-d; 6a-d) und mindestens 15 % der charakteristischen Länge und höchstens 60 % der charakteristischen Länge (L) beträgt, dem gleichen Sektor zugeordnete Einzelsektorsignale der Strahlungsdetektoren (31-34) zu einem Gesamtsektorsignal zusammenfaßt und aus einer Auswertung der Gesamtsektorsignale die Angaben über die Einfallsrichtung erzeugt werden.

11. Verfahren nach Anspruch 10, **dadurch gekennzeichnet, dass** zwischen benachbarten Strahlungsdetektoren (31-34) ein Abstand von zwischen 6 und 25 mm vorgesehen wird.

12. Verfahren nach einem der Ansprüche 10 oder 11, **dadurch gekennzeichnet, dass** Strahlungsdetektoren unterschiedlich spektral empfindlicher Art (2, 3) verwendet werden und die Gesamtsektorsignale aus den Einzelsektorsignalen getrennt nach Arten der Strahlungsdetektoren erzeugt werden, wobei der Abstand auf die Arten von Strahlungsdetektoren bezogen ist.

13. Verfahren nach Anspruch 12, **dadurch gekennzeichnet, dass** die Einzelsektor- oder Gesamtsektorsignale der Strahlungsdetektoren unterschiedlich spektral empfindlicher Art (2, 3) verglichen werden und daraus eine Angabe über die Wellenlänge der einfallenden Strahlen erzeugt wird.

**Claims**

1. A device for locating modulated optical radiation sources, comprising:

   - several radiation detectors (31-34), sensitive to optical radiation of a predetermined radiation range and comprise detector elements (4a-d; 6a-d), each outputting individual sector signals assigned to a sector in space from which incident radiation strikes the radiation detector, and
   - an evaluation device (35) supplied with the individual sector signals of the radiation detectors (31-34) and generating therefrom information concerning the direction of incidence from which the optical radiation strikes the device (50),
   - wherein a characteristic length (L) exists for the optical radiation, within which radiation intensity fluctuations occurring in the cross-section of radiation are not statistically independent

   **characterized in that**

   - the characteristic length (L) is between 3 and 6 cm,
   - a distance (Dopt) is provided between horizontally and/or vertically adjacent radiation detectors (31-34), which distance is larger than a distance between the individual detector elements (4a-d; 6a-d) and which makes up at least 15 % of the characteristic length and no more than 60 % of the characteristic length (L), and
   - the evaluation device (35) combines all individual sector signals of the radiation detectors (31-34) assigned to the same the sector to a total sector signal and produces the information concerning the direction of incidence from an evaluation of the total sector signals.

2. The device according to claim 1, **characterized in that** the distance between adjacent radiation detectors (31-34) is between 6 and 25 mm.

3. The device according to any of the above claims, **characterized in that**

   - the detector elements (4a-d; 6a-d) of each radiation detector (31-34) are arranged around a center (Z), so that each of the detector elements (4a-d; 6a-d) is located in its assigned sector, and
   - an aperture device is provided in front of each radiation detector (31-34) as seen in the direction of incidence of radiation, the aperture device having an aperture opening (5, 7) which is arranged centrally above the center (Z) and is spaced apart from the center (Z) along the direction of incidence and partially covers all detector elements (4a-d; 6a-d) in view of the center, so that the intensity of radiation striking each detector element (4a-d; 6a-d) depends on the direction of incidence.

4. The device according to any of the above claims, **characterized in that** the radiation detectors (31-34) are assembled on separate semiconductor substrates, and the distance is in each case formed by a gap between the semiconductor substrates.

5. The device according to any of the above claims, **characterized in that** at least two types (2, 3) of radiation detectors having different spectral sensitivity are provided, wherein the distance and the horizontal position relates to the respective types (2, 3) of radiation detectors and preferably detector elements of the radiation detectors of the one type (2) are silicon photoreceptors and detector elements of the radiation detector of the other type (3) are indium-gallium-arsenide photoreceptors.

6. The device according to claims 5 and 4, **characterized in that** a radiation detector of the second type is located between two radiation detectors of the first type.

7. The device according to claim 5, **characterized in that** each radiation detector (31-34) comprises, successively arranged along a main axis of incidence of radiation: a first aperture opening (5), a first set of at least three detector elements (4a-d) arranged around a center, a second aperture opening (7) and a second set of at least three detector elements (6a-d) arranged around a center, wherein in a projection along the main axis of incidence (A) the aperture openings (5, 7) and the sets of detector elements (4a-d; 6a-d) are arranged concentrically and the first aperture opening (5) and the first set (4a-d) surround in the projection along the main axis of incidence (A) the second aperture opening (7) and the second set (6a-d) on the outside and wherein the detector elements of the two sets have different spectral sensitivity.

**8.** The device according to any of the above claims, **characterized in that** the detector elements of each radiation detector (31-34) together have an extent of at least 5-10% of the characteristic length (L).

**9.** The device according to any of the above claims, **characterized in that** each radiation detector comprises four detector elements arranged in a square and that the evaluation device calculates a value of a first angle of incident radiation according to the equation A = (Sa+Sd-Sb-Sc)/(Sa+Sb+Sc+Sd) and a value of a second angle of incident radiation according to the equation E = (Sa+Sb-Sc-Sd)/(Sa+Sb+Sc+Sd), wherein Sa-Sd are the individual sector signals.

**10.** A method for locating modulated optical radiation sources, wherein several radiation detectors (31-34), which are sensitive to optical radiation of a predetermined radiation range and comprise detector elements (4a-d; 6a-d) outputting individual sector signals assigned each to a sector in space from which incident radiation strikes the radiation detector (31-34), and information concerning the direction of incidence from which radiation strikes the device (50) is generated from the individual sector signals of the radiation detectors (31-34), wherein a characteristic length (L) exists the optical radiation, within which radiation intensity fluctuations occurring in the cross-section of radiation are not statistically independent, **characterized in that** the characteristic length (L) is between 3 and 6 cm, a distance is provided between horizontally and/or vertically adjacent radiation detectors (31-34), which is larger than a distance between the individual detector elements (4a-d; 6a-d) and which makes up at least 15% of the characteristic length and nor more than 60 % of the characteristic length (L), and individual sector signals of the radiation detectors (31-34) assigned to the same sector are combined into a total sector signal and the information concerning the direction of incidence is generated from an evaluation of the total sector signals.

**11.** The method according to claim 10, **characterized in that** a distance between 6 and 25 mm is provided between adjacent radiation detectors (31-34).

**12.** The method according to claim 10 or 11, **characterized in that** radiation detectors of different spectral sensitivity types (2, 3) are used and the total sector signals are generated from the individual sector signals of each types of radiation detectors separately, wherein the distance is related to the types of radiation detectors.

**13.** The method according to claim 12, **characterized in that** the individual sector signals or the total sector signals of the radiation detectors of different spectral sensitivity types (2, 3) are compared and an indication of the wavelength of incident radiation is generated therefrom.

**Revendications**

**1.** Dispositif destiné à localiser des sources de rayonnement optiques modulées, qui comporte :

- plusieurs détecteurs de rayonnement (31 à 34) qui sont sensibles au rayonnement optique dans un spectre de rayonnement prédéfini et qui comportent des éléments détecteurs (4a à d ; 6a à d), lesquels délivrent chacun des signaux de secteurs individuels qui sont associés à un secteur dans l'espace, à partir duquel le rayonnement est incident sur le détecteur de rayonnement et
- un système d'évaluation (35) vers lequel sont amenés les signaux de secteurs individuels des détecteurs de rayonnement (31 à 34) et qui génère à partir de ces derniers des indications concernant la direction d'incidence, à partir de laquelle le rayonnement est incident sur le dispositif (50),
- une longueur caractéristique (L) à l'intérieur de laquelle des fluctuations de l'intensité de rayonnement se produisant dans la section transversale de rayonnement ne sont pas statistiquement indépendantes étant donnée pour le rayonnement optique,

**caractérisé en ce que**

- la longueur caractéristique (L) se situe entre 3 et 6 cm,
- entre des détecteurs de rayonnement (31 à 34) voisins à l'horizontale et/ou à la verticale est prévu chaque fois un écart (Dopt) qui est supérieur à un écart entre les éléments détecteurs (4a à d ; 6a à d) individuels et qui s'élève au moins à 15 % de la longueur caractéristique (L) et au plus à 60 % de la longueur caractéristique (L) et
- le système d'évaluation (35) rassemble en un signal de secteurs global tous les signaux de secteurs individuels des détecteurs de rayonnement (31 à 34) associés au même secteur et génère à partir d'une évaluation des signaux de secteurs globaux les indications concernant la direction d'incidence.

**2.** Dispositif selon la revendication 1, **caractérisé en ce que** l'écart entre des détecteurs de rayonnement (31 à 34) voisins se situe entre 6 et 25 mm.

**3.** Dispositif selon l'une quelconque des revendications précédentes, **caractérisé en ce que**

- les éléments détecteurs (4a à d ; 6a à d) de chaque détecteur de rayonnement (31 à 34) sont placés autour d'un centre (Z), de sorte que chacun des éléments détecteurs (4a à d ; 6a à d) se situe dans le secteur qui lui est associé et
- vu dans la direction d'incidence du rayonnement, chaque détecteur de rayonnement (31 à 34) comporte à l'avant des éléments détecteurs un système de diaphragme qui a un orifice de diaphragme (5, 7) qui est placé au milieu, au dessus du centre (Z) et le long de la direction d'incidence, avec un écart par rapport au centre (Z) et en visée sur le centre, recouvre en partie tous les éléments détecteurs (4a à d ; 6a à d), de sorte que l'intensité de rayonnement incidente sur chaque élément détecteur (4a à d ; 6a à d) dépend de la direction d'incidence.

4.  Dispositif selon l'une quelconque des revendications précédentes, **caractérisé en ce que** les détecteurs de rayonnement (31 à 34) sont construits sur des substrats à semi-conducteurs indépendants et l'écart est formé chaque fois par un intervalle entre les substrats à semi-conducteurs.

5.  Dispositif selon l'une quelconque des revendications précédentes, **caractérisé en ce qu'**au moins deux sortes (2, 3) de détecteurs de rayonnement sont prévues, qui font preuve d'une sensibilité spectrale différente, l'écart et la position horizontale étant rapportées aux sortes (2, 3) respectives de détecteurs de rayonnement et de préférence des éléments détecteurs des détecteurs de rayonnement de l'une (2) des sortes étant des photorécepteurs en silicium et des éléments détecteurs du détecteur de rayonnement de l'autre sorte (3) étant des photorécepteurs en indium-gallium-arséniure.

6.  Dispositif selon les revendications 5 et 4, **caractérisé en ce qu'**entre deux détecteurs de rayonnement de la première sorte se situe un détecteur de rayonnement de la deuxième sorte.

7.  Dispositif selon la revendication 5, **caractérisé en ce que** chaque détecteur de rayonnement (31 à 34) comporte, en rangée le long d'un axe d'incidence principal du rayonnement : un premier orifice de diaphragme (5), un premier jeu d'au moins trois éléments détecteurs (4a à d) placés autour du centre, un deuxième orifice de diaphragme (7) et un deuxième jeu d'au moins trois éléments détecteurs (6a à d) placés autour du centre, dans chaque projection le long de l'axe d'incidence principal (A), les orifices de diaphragme (5, 7) et des jeux d'éléments détecteurs (4a à d ; 6a à d) étant placés de manière concentrique et dans la projection le long de l'axe d'incidence principal (A), le premier orifice de diaphragme (5) et le premier jeu (4a à d) entourant à l'extérieur le deuxième orifice de diaphragme (7) et le deuxième jeu (6a à d) et les éléments détecteurs des deux jeux faisant preuve d'une sensibilité spectrale différente.

8.  Dispositif selon l'une quelconque des revendications précédentes, **caractérisé en ce que** les éléments détecteurs de chaque détecteur de rayonnement (31 à 34) ont ensemble une extension d'au moins 5 à 10 % de la longueur caractéristique (L).

9.  Dispositif selon l'une quelconque des revendications précédentes, **caractérisé en ce que** chaque détecteur de rayonnement comporte quatre éléments détecteurs placés de manière quadratique et **en ce que** le système d'évaluation calcule une valeur pour un premier angle du rayonnement incident selon l'équation A = (Sa+Sd-Sb-Sc)/(Sa+Sb+Sc+Sd) et une valeur pour un deuxième angle de rayonnement incident selon l'équation E = (Sa+Sb-Sc-Sd)/(Sa+Sb+Sc+Sd), Sa à Sd étant les signaux de secteurs individuels.

10. Procédé destiné à localiser des sources de rayonnement optiques modulées, plusieurs détecteurs de rayonnement (31 à 34) qui sont sensibles à un rayonnement optique dans un spectre de rayonnement prédéfini et qui comportent des éléments détecteurs (4a à d ; 6a à d) délivrant des signaux de secteurs individuels qui sont chacun associé à un secteur dans l'espace à partir duquel le rayonnement est incident sur le détecteur de rayonnement (31 à 34) et à partir des signaux de secteurs individuels des détecteurs de rayonnement (31 à 34) étant générées des indications concernant le direction d'incidence à partir de laquelle le rayonnement est incident sur le dispositif (50), pour le rayonnement optique étant donnée une longueur caractéristique (L) à l'intérieur de laquelle des fluctuations de l'intensité de rayonnement produites dans la section transversale de rayonnement ne sont pas statistiquement indépendantes, **caractérisé en ce que** la longueur caractéristique se situe entre 3 et 6 cm, entre des détecteurs de rayonnement (31 à 34) voisins à l'horizontale et/ou à la verticale, il est prévu chaque fois un écart qui est supérieur à un écart entre les éléments détecteurs (4a à d ; 6a à d) individuels et qui s'élève au moins à 15 % de la longueur caractéristique et au plus à 60 % de la longueur caractéristique (L), des signaux de secteurs individuels des détecteurs de rayonnement (31 à 34) associés au même secteur sont rassemblés en un signal de secteurs global et à partir d'une évaluation des signaux de secteurs globaux sont générées les indications concernant la direction d'incidence.

11. Procédé selon la revendication 10, **caractérisé en**

**ce qu'**entre des détecteurs de rayonnement (31 à 34) voisins, il est prévu un écart compris entre 6 et 25 mm.

12. Procédé selon l'une quelconque des revendications 10 ou 11, **caractérisé en ce qu'**on utilise des détecteurs de rayonnement d'une sorte (2, 3) à différente sensibilité spectrale et les signaux de secteurs globaux sont générés à partir des signaux de secteurs individuels en étant séparés par sortes des détecteurs de rayonnement, l'écart étant rapporté aux sortes de détecteurs de rayonnement.

13. Procédé selon la revendication 12, **caractérisé en ce que** les signaux de secteurs individuels ou de secteurs globaux des détecteurs de rayonnement de sorte (2, 3) à différente sensibilité au rayonnement sont comparés et qu'il en est généré une indication concernant la longueur d'onde des rayons incidents.

Fig. 1

Fig. 2

Fig. 3

Fig. 4

EP 2 502 088 B1

Fig. 5

**Fig. 6**

**Fig. 7**

Fig. 8

Fig. 9          Fig. 10          Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1357393 A1
- EP 0747719 A1
- DE 3323828 C2
- DE 3525518 C2
- US 5428215 A
- DE 102007024051 A1
- DE 102009046740

**In der Beschreibung aufgeführte Nicht-Patentliteratur**

- **QUELLMALZ, W.** *Steigerung der Genauigkeit von Laser Trackern,* ISBN 3867273340
- **MITANI Y. et al.** Proceedings of the 41st SICE Annual Conference. *SICE,* 2002, vol. 3, 1881-1884
- **W.A. COLES ; R.G. FREHLICH.** Simultaneous measurements of angular scattering and intensity scintillation in the atmosphere. *J. Opt. Soc. Am.,* August 1982, vol. 72 (8), 1042-1048